# EUROPEAN PATENT SPECIFICATION

(11) **EP 1 622 343 B1**
(45) Date of publication and mention of the grant of the patent: **14.09.2011**
(21) Application number: 05106812.0
(22) Date of filing: 25.07.2005
(51) Int. Cl.: H04M 1/22, G09G 3/34

(54) **Portable radio terminal**
Tragbares Funkkommunikationsendgerät
Terminal portatif de communication radio

(30) Priority: 26.07.2004 JP 2004217824
(43) Date of publication of application: 01.02.2006
(73) Proprietor: NEC Corporation, Minato-ku Tokyo 108-8001 (JP)
(72) Inventor: Horiguchi, Masuyo, c/o NEC Saitama, Ltd., Kodama-gun, Saitama (JP)
(74) Representative: Esslinger, Alexander

(56) References cited:
- EP-A- 1 202 243
- EP-A- 1 320 245
- WO-A-02/21500
- US-A1- 2001 013 854

## Description

### BACKGROUND OF THE INVENTION

### 1. Field of the Invention

The present invention relates to a portable radio terminal having a display section, such as a portable telephone, and more particularly to a technique of controlling brightness of a display screen of the display section.

### 2. Description of the Related Art

Generally, a portable radio terminal such as a portable telephone has a liquid crystal display. The liquid crystal display includes a display screen and a backlight for illuminating the display screen. When the portable radio terminal is used, the backlight automatically lights up to clearly display characters and images on the display screen. A battery (secondary battery) built into the portable radio terminal supplies power to the backlight. Thus, lighting of the backlight shortens the usable period of the portable radio terminal.

In order to solve this problem, JP 2002-94656 A discloses a technique in which illuminating a display screen is suspended during voice communication to reduce the power consumption of the wireless communication terminal. In addition, JP 2002-123231 A discloses a technique in which, in a portable telephone, lighting time of a backlight is determined according to the number of characters contained in an e-mail to be displayed or a scroll operation.

The display screens of recent portable telephones display various images, such as still images of photographs or the like, moving images, and game images, in addition to characters. The display screens need to have a certain brightness level or more to clearly display those color images. However, high brightness of the display screen consumes large electric power.

WO 02/21500 discloses a single liquid crystal display with dynamic scan and split backlights. A power saving is achieved by using two backlights, one to eliminate a display when the device is functioning as a radio or cell phone, and the other to eliminate the display when it is functioning as a PDA.

US 2001/0013854 discloses an electronic apparatus which includes a mode detecting section for detecting an operation mode which has been set and a backlighting control section for controlling the brightness of a backlight based on the detected operation mode.

The invention is defined in claim 1. The dependent claims define embodiments of the invention.

A portable radio terminal according to an embodiment of the present invention includes a display section, a determination section, and a control section. The display section includes a display screen. The determination section determines whether data to be displayed on the display screen is text data or not. The control section sets brightness of the display screen according to each of text data and data other than the text data, to be displayed on the display screen.

A portable radio terminal according to another embodiment of the present invention includes a display section that has a display screen, and a control section that sets the brightness of the display screen according to each function of the portable radio terminal.

In the portable radio terminal, the control section can include a key input section from which the lightness of the display screen is set according to an input. The portable radio terminal can include a storage section that stores the set brightness.

With a portable radio terminal according to the present invention, a user can determine the lightness of the display screen according to the type of data to be displayed on the display screen or a function of the portable radio terminal to reduce the power consumption of the display section.

### BRIEF DESCRIPTION OF THE DRAWING

The above and other objects, features and advantages of the present invention will become apparent form the following detailed description when taken with the accompanying drawings in which:
FIG. 1 is a block diagram of a portable radio terminal according to an embodiment of the present invention;
FIG. 2 is a flowchart of an operation example of the portable radio terminal according to the embodiment of the present invention;
FIG. 3 shows examples of a display screen for setting brightness, of the portable radio terminal according to the embodiment of the present invention;
FIG. 4 is a flowchart of an operation example of a portable radio terminal according to another embodiment of the present invention;
FIG. 5 shows examples of a display screen for setting lightness, of the portable radio terminal according to the another embodiment of the present invention; and
FIG. 6 shows examples of a display screen for setting brightness, of a portable radio terminal according to still another embodiment of the present invention.

### DETAILED DESCRIPTION OF THE PREFERRED EMBODIMENTS

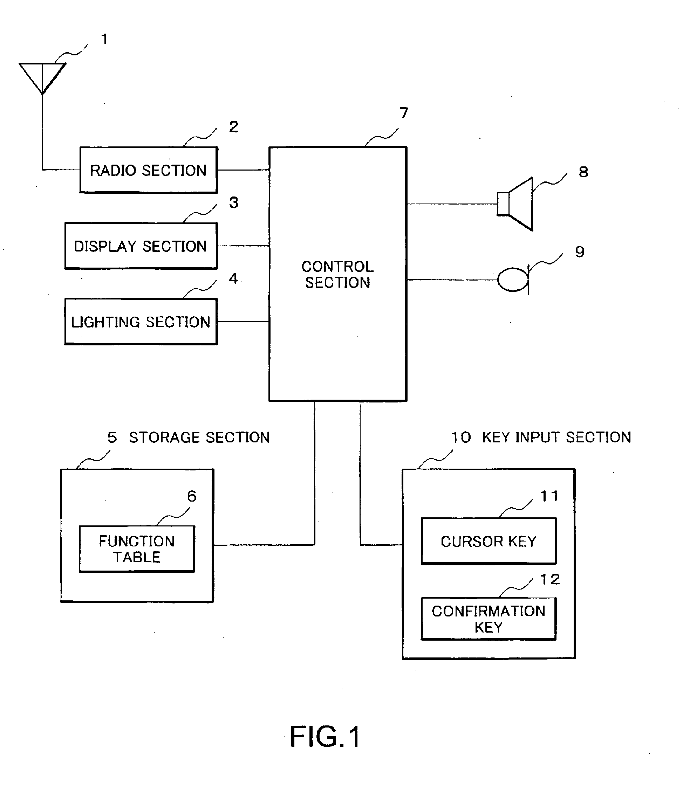

Preferred embodiments of the present invention will be described below. FIG. 1 shows a configuration example of a portable telephone as an example of a portable radio terminal of the present invention. The portable telephone includes an antenna 1, a radio section 2, a display section 3, a lighting section 4, a storage section 5, a control section 7, a speaker 8, a microphone 9, and a key input section 10. The display section 3 includes a liquid crystal display, for example, and has a display screen. The display screen can display telephone numbers, e-mails, other text data, web contents, game images, still images, and moving images. The lighting section 4 includes a backlight or the like which illuminates the display screen. The storage section 5 stores or memorizes brightness set according to the type of data to be displayed and lightness set according to a function of the portable telephone. The storage section 5 includes a function table 6 of the portable telephone. The control section 7 controls the whole portable telephone. The control section 7 can identify a selected function of the portable telephone and the type of data to be displayed on the display screen. The control section 7 controls the display section 3 and the lighting section 4 based on data concerning the brightness stored in the storage section 5. Further, the control section 7 can control the backlight to control the brightness of the display screen when the display section 3 displays text data. When the display section 3 displays, for example, color images or game images, the control section 7 can control the brightness of the color images or the game images. The key input section 10 includes a cursor key 11 and a confirmation key 12. The portable telephone further includes a vibrator and a battery.

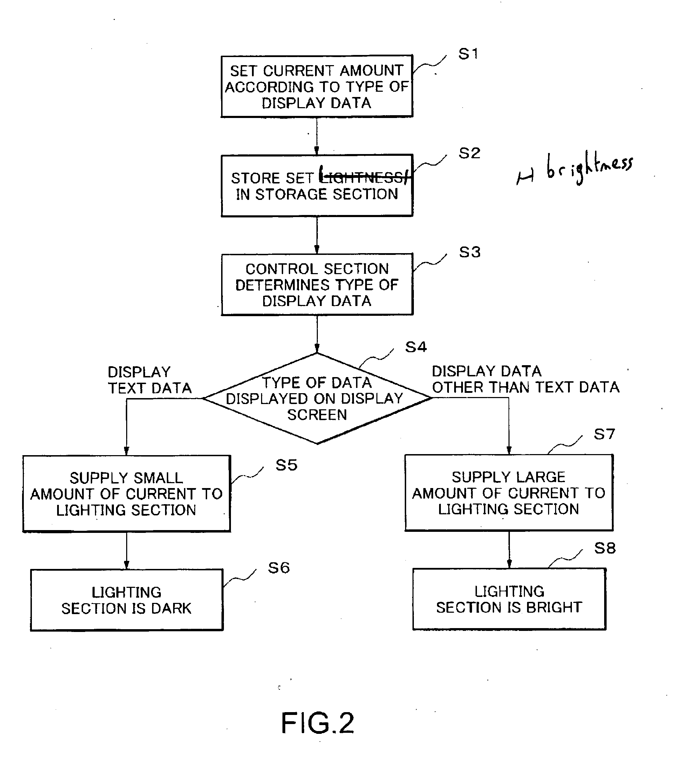

FIG. 2 shows an example in which the display screen is controlled at two lightness levels. The lightness of the display screen (for example, the amount of current to be supplied to the lighting section 4) is set according to data to be displayed (S1). The manufacturer of the portable telephone or the user can set the brightness. The set brightness is stored or memorized in the storage section 5 (S2). At the time of starting operation of the portable telephone, the control section 7 determines the type of data displayed on the display screen (S3). When text data is displayed on the display screen (S4), a small amount of current is supplied to the lighting section 4 (backlight) (S5) and the lighting section 4 is set to be dark (S6). On the other hand, when data other than text data is displayed on the display screen (S4), a larger amount of current than the above current is supplied to the lighting section 4 (backlight) (S7) and the lighting section 4 is set to be bright (S8).

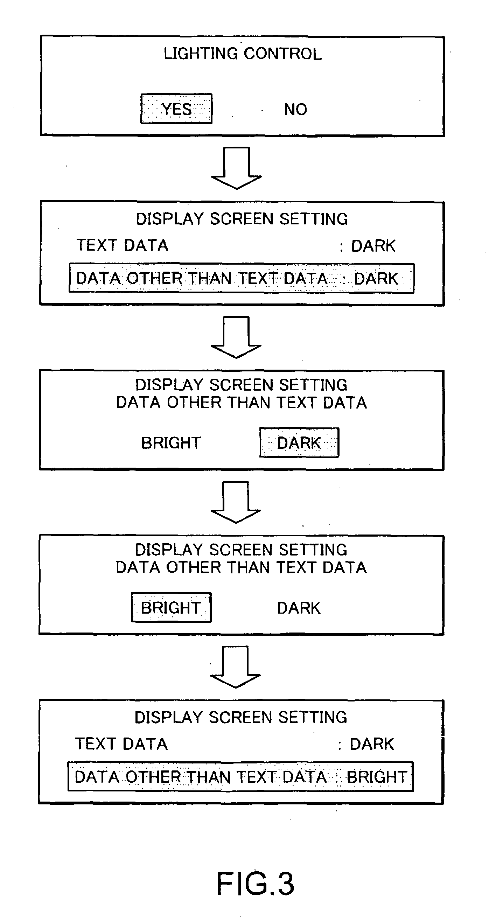

FIG. 3 shows examples of the display screen for the user to control the brightness, in the control example shown in FIG. 2. When the user displays an initial screen for the lighting control and selects "YES" in the screen, the contents of the current setting about the lightness of the display screen are displayed. When the user selects data other than text data, a screen for setting the brightness of the display screen for displaying data other than text data appears. The screen shows that the display screen is currently set to a dark state. When the user selects a bright state, a screen showing the changed setting contents of the display screen appears. The screen shows that data other than text data is to be displayed in the bright state. As a result of the above-mentioned operation, data (such as still images, moving images, and game images) other than text data is displayed in the bright state. On the other hand, text data (such as e-mails and telephone numbers) is displayed in the dark state so that the power consumption of the battery is suppressed.

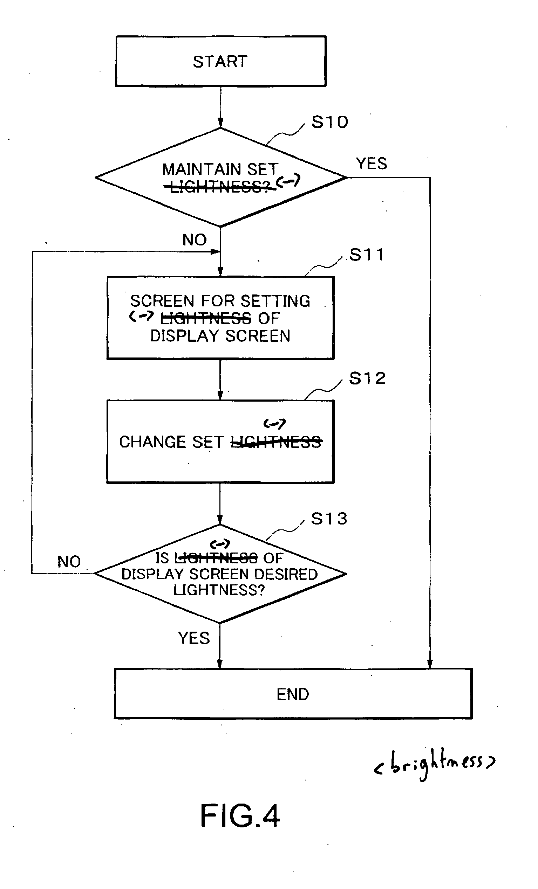

FIG. 4 shows an example of a basic control in which the lighting section 4 is controlled at five brightness levels. First, the user determines whether the set brightness of the display screen is maintained or changed (S10). When the user operates a predetermined key, a screen for setting the brightness of the display screen appears (S11). The user changes the currently-set brightness of the display screen (S12). If the user satisfies the lightness of the display screen after the change, the brightness control operation ends (YES in S13). If the user desires to change again the brightness of the display screen, the above operation is repeated (NO in S13).

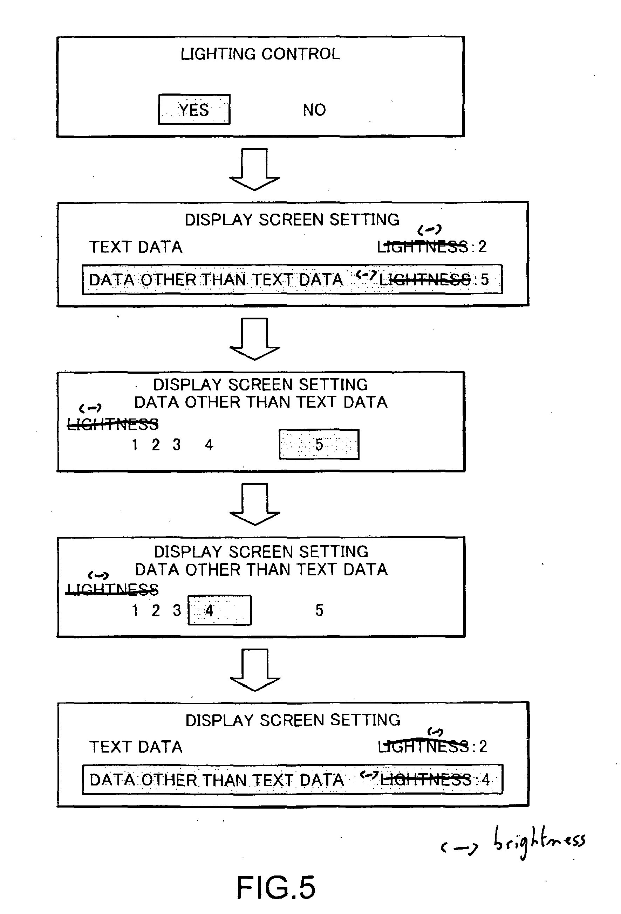

FIG. 5 shows examples of the display screen for the user to control the brightness, in the control example shown in FIG. 4. When the user displays an initial screen for the lighting control and selects "YES" in the screen, the contents of the current setting of the display screen are displayed. In the current setting, when the display screen displays text data, the brightness of the display screen has been set to a second brightness level out of the five levels, and when the display screen displays data other than text data, the brightness of the display screen has been set to a fifth lightness level (brightest level) out of the five levels. If the user selects data other than text data, a screen for setting the brightness of the display screen for displaying data other than text data appears. On the screen, the user can select a desired brightness level from among the five lightness levels. In the example, the user selects a fourth lightness level from among the five brightness levels on the screen. Then, a screen showing the changed setting contents of the display screen appears again. The user can confirm the result selected by himself/herself, on the screen.

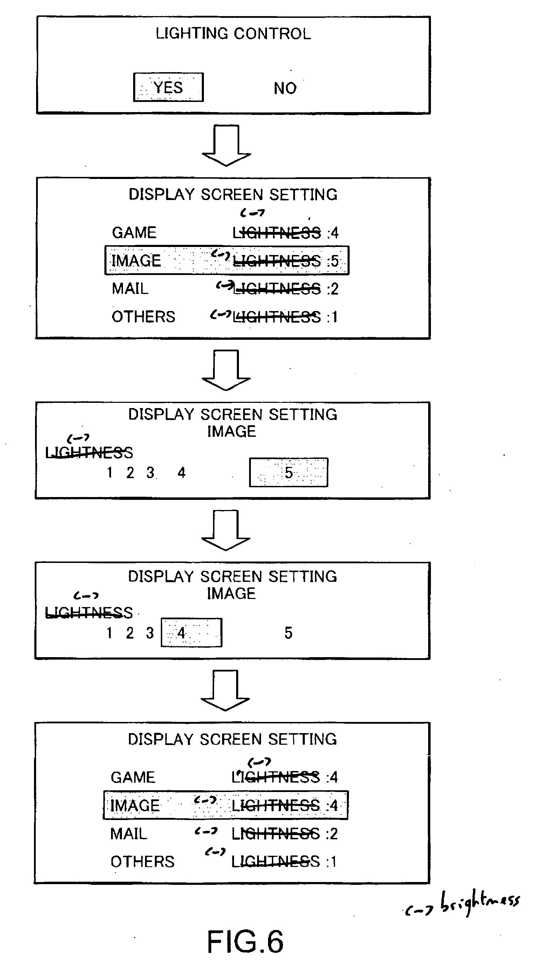

FIG. 6 shows an example in which the lighting section 4 is controlled at five brightness levels according to a function of the portable telephone. FIG. 6 specifically shows examples of the display screen which appear during the control. When the user displays an initial screen for the lighting section control and selects "YES" in the screen, the contents of the current setting of the display screen are displayed. In the screen, brightness levels which are set according to respective functions of the portable telephone are displayed. In FIG. 6, four functions of game, image display, e-mail display, and "others" are illustrated as functions of the portable telephone. A fourth brightness level has been assigned to the function of game, a fifth lightness level, which is the brightest level, has been assigned to the function of image display, a second brightness level has been assigned to the function of e-mail display, and a first brightness level, which is the darkest level, has been assigned to the function of "others". To change the brightness of the image display, the user selects "image" in the screen. Then, a screen for setting the brightness of the display screen concerning the image appears. In this example, the user selects the fourth lightness level from among the brightness levels. A screen showing the changed setting contents of the display screen appears. The user can confirm the result selected byhimself/herself, on the screen. The user can set the brightness of the display screen for each function of the portable telephone to reduce the power consumption of the battery.

The number of brightness levels of the display screen is not limited to the two levels or the five levels. The control section can set the display screen to any brightness within a range of a predetermined brightness, and store the lightness in the storage section.

While the present invention has been described in connection with certain preferred embodiments, it is to be understood that the subject matter encompassed by the present invention is not limited to those specific embodiments.

## Claims

1. A portable radio terminal, comprising:
a display section (3) with a display screen for displaying data;
a backlight (4) for illuminating the display screen; and **characterised by** comprising:
a control section (7) adapted to determine whether the data displayed on the display screen contains data other than text data or not, and adapted to set the brightness of the display screen by controlling amount of current supplied to the backlight (4) to be larger when the data displayed on the display screen contains data other than the text data.

2. A portable radio terminal according to claim 1, further comprising a key input section (10), wherein the control section (7) sets the brightness of the display screen according to an input from the key input section (10).

3. A portable radio terminal according to claim 1, further comprising a storage section (5) adapted to store brightness of the display screen,
wherein the storage section (5) adapted to store brightness of the display screen used for displaying text data and brightness of the display screen used for displaying data which contains data other than the text data.

4. A portable radio terminal according to claim 3, wherein the control section (7) sets brightness of the display screen according to brightness stored in the storage section (5).

5. A portable radio terminal according to claim 1, wherein the control section (7) changes the brightness of the display screen at two levels.

6. A portable radio terminal according to claim 5, wherein the control section (7) sets the brightness of the display screen to a dark state when the display screen displays text data and sets the brightness of the display screen to a bright state when the display screen displays data which contains data other than the text data.

7. A portable radio terminal according to claim 1, wherein the control section (7) changes the brightness of the display screen at n levels, and
wherein n is an integer of three or more.

## Patentansprüche

1. Tragbares Funk-Endgerät, umfassend:
einen Anzeigeteil (3) mit einem Bildschirm zum Anzeigen von Daten;
eine Hintergrundbeleuchtung (4) zum Beleuchten des Bildschirms; und **dadurch gekennzeichnet, dass** es umfasst:
einen Steuerteil (7), der dafür eingerichtet ist, zu ermitteln, ob die auf dem Bildschirm angezeigten Daten andere Daten als Textdaten enthalten oder nicht, und der dafür eingerichtet ist, die Helligkeit des Bildschirms einzustellen, indem der Betrag des der Hintergrundbeleuchtung (4) zugeführten Stroms so gesteuert wird, dass er größer ist, wenn die auf dem Bildschirm angezeigten Daten andere Daten als die Textdaten enthalten.

2. Tragbares Funk-Endgerät gemäß Anspruch 1, das weiterhin einen Tastatureingabeteil (10) umfasst, wobei der Steuerteil (7) die Helligkeit des Bildschirms in Übereinstimmung mit einer Eingabe von dem Tastatureingabeteil (10) einstellt.

3. Tragbares Funk-Endgerät gemäß Anspruch 1, das weiterhin einen Speicherteil (5) umfasst, der dafür eingerichtet ist, die Helligkeit des Bildschirms zu speichern, wobei der Speicherteil (5) dafür eingerichtet ist, die zum Anzeigen von Textdaten verwendete Helligkeit des Bildschirms und die zum Anzeigen von Daten, die andere Daten als die Textdaten enthalten, verwendete Helligkeit des Bildschirms zu speichern.

4. Tragbares Funk-Endgerät gemäß Anspruch 3, wobei der Steuerteil (7) die Helligkeit des Bildschirms in Übereinstimmung mit der im Speicherteil (5) gespeicherten Helligkeit ändert.

5. Tragbares Funk-Endgerät gemäß Anspruch 1, wobei der Steuerteil (7) die Helligkeit des Bildschirms in zwei Stufen einstellt.

6. Tragbares Funk-Endgerät gemäß Anspruch 5, wobei der Steuerteil (7) die Helligkeit des Bildschirms auf einen dunklen Zustand einstellt, wenn der Bildschirm Textdaten anzeigt, und die Helligkeit des Bildschirms auf einen hellen Zustand einstellt, wenn der Bildschirm Daten anzeigt, die andere Daten als die Textdaten enthalten.

7. Tragbares Funk-Endgerät gemäß Anspruch 1, wobei der Steuerteil (7) die Helligkeit des Bildschirms in n Stufen ändert, und
wobei n eine ganze Zahl von drei oder mehr ist.

## Revendications

1. Terminal radio portable comprenant :
une section d'affichage (3) avec un écran d'affichage pour afficher des données ;
un rétroéclairage (4) pour éclairer l'écran d'affichage ; et **caractérisé en ce qu'**il comprend :
une section de commande (7) adaptée pour déterminer si les données affichées sur l'écran d'affichage contiennent des données autres que les données de texte ou non, et adaptée pour régler la luminosité de l'écran d'affichage en commandant la quantité de courant fournie au rétroéclairage (4) pour qu'elle soit plus grande quand les données affichées sur l'écran d'affichage contiennent des données autres que les données de texte.

2. Terminal radio portable selon la revendication 1, comprenant en outre une section d'entrée de touche (10), dans lequel la section de commande (7) règle la luminosité de l'écran d'affichage selon une entrée de la section d'entrée de touche (10).

3. Terminal radio portable selon la revendication 1, comprenant en outre une section de stockage (5) adaptée pour stocker la luminosité de l'écran d'affichage,
dans lequel la section de stockage (5) est adaptée pour stocker la luminosité de l'écran d'affichage utilisé pour afficher des données de texte et la luminosité de l'écran d'affichage utilisé pour afficher des données qui contiennent des données autres que les données de texte.

4. Terminal radio portable selon la revendication 3, dans lequel la section de commande (7) règle la luminosité de l'écran d'affichage selon la luminosité stockée dans la section de stockage (5).

5. Terminal radio portable selon la revendication 1, dans lequel la section de commande (7) change la luminosité de l'écran d'affichage à deux niveaux.

6. Terminal radio portable selon la revendication 5, dans lequel la section de commande (7) règle la luminosité de l'écran d'affichage à un état foncé lorsque l'écran d'affichage affiche des données de texte et fixe la luminosité de l'écran d'affichage à un état clair lorsque l'écran d'affichage affiche des données qui contiennent des données autres que les données de texte.

7. Terminal radio portable selon la revendication 1, dans lequel la section de commande (7) change la luminosité de l'écran d'affichage à n niveaux, et
dans lequel n est un entier de trois ou plus.
